# EUROPÄISCHE PATENTANMELDUNG

(11) **EP 0 999 041 A2**
(43) Veröffentlichungstag der Anmeldung: **10.05.2000**
(21) Anmeldenummer: 99121204.4
(22) Anmeldetag: 23.10.1999
(51) Int. Cl.: B32B 27/36

(54) **Folienlaminat, enthaltend eine biaxial orientierte Polyesterfolie mit hoher Sauerstoffbarriere, Verfahren zu seiner Herstellung und Verwendung**

(30) Priorität: 03.11.1998 DE 19850723; 04.11.1998 DE 19850882
(71) Anmelder: Mitsubishi Polyester Film GmbH, 65203 Wiesbaden (DE)
(72) Erfinder: Peiffer, Herbert, 55126 Mainz (DE); Davis, Richard Lee, 65187 Wiesbaden (DE)
(74) Vertreter: Schweitzer, Klaus, Dr.

(57) **Zusammenfassung**

Offenbart ist ein Folienlaminat, enthaltend eine biaxial orientierte Polyesterfolie und eine weitere, auf die Polyesterfolie auflaminierte Folie, wobei die Polyesterfolie eine Basisschicht umfaßt, die zu mindestens 80 Gew.-% aus einem thermoplastischen Polyester besteht, mindestens eine Deckschicht und eine auf der Deckschicht befindlichen metallischen oder keramischen Schicht, wobei die Deckschicht aus einem Polymer oder einem Copolymer oder einem Gemisch von Polymeren besteht, das mindestens 40 Gew.-% an Ethylen-2,6-naphthalat-Einheiten, bis zu 40 Gew.-% an Ethylen-terephthalat-Einheiten und gegebenenfalls bis zu 60 Gew.% an Einheiten aus anderen aliphatischen, cycloaliphatischen oder aromatischen Diolen und/oder Dicarbonsäuren enthält, mit der Maßgabe, daß der T_{g}2-Wert der Polyesterfolie über dem T_{g}2-Wert der Basisschicht, aber unter dem T_{g}2-Wert der Deckschicht liegt.

## Beschreibung

Die Erfindung betrifft ein Folienlaminat, enthaltend eine biaxial orientierte Polyesterfolie mit einer Basisschicht, die zu mindestens 80 Gew.-% aus einem thermoplastischen Polyester besteht, einer Deckschicht und einer auf der Deckschicht befindlichen barrierefunktionalen Schicht. Die Erfindung betrifft weiterhin ein Verfahren zur Herstellung des Laminats und seine Verwendung.

In vielen Fällen wird bei Lebensmittelverpackungen eine hohe Sperrwirkung (gleichbedeutend mit einer geringen Durchlässigkeit bzw. einer geringen Permeation) gegenüber Gasen, Wasserdampf und Aromastoffen verlangt. Ein gängiges Verfahren, solche Verpackungen herzustellen, besteht darin, die dafür verwendeten Kunststoffolien mit Aluminium im Hochvakuum zu bedampfen bzw. zu metallisieren. Ein weiteres gängiges Verfahren besteht darin, die Folien mit keramischen Materialien, wie SiOₓ, AIOₓ oder MgOₓ, zu beschichten. Die Sperrwirkung gegenüber den oben genannten Stoffen hängt im wesentlichen von der Art der Polymeren in der Folie und der Güte der aufgebrachten Sperrschichten ab. So haben metallisierte, biaxial orientierte Polyesterfolien eine sehr hohe Sperrwirkung gegenüber Gasen, wie Sauerstoff und Aromastoffen. Metallisierte, biaxial orientierte Polypropylenfolien wiederum besitzen eine hohe Wasserdampfbarriere.

Aufgrund ihrer guten Sperreigenschaften werden mit metallisierten bzw. keramisch beschichteten Folien insbesondere Lebens- und Genußmittel verpackt, bei denen durch lange Lager- oder Transportzeiten die Gefahr besteht, daß im Falle einer nicht ausreichenden Barriere die verpackten Lebensmittel verderben, ranzig werden oder an Geschmack verlieren, beispielsweise bei Kaffee, fetthaltigen Snacks (Nüssen, Chips u.a.) oder kohlensäurehaltigen Getränken (in Standbeuteln; engl.: pouches). Daneben eignen sich beschichtete Polyesterfolien zur thermischen Isolierung von technischen Geräten. Beispielsweise können mit Aluminium bedampfte Polyesterfolien zur Verbesserung der Isolierung von Kühlschränken verwendet werden. Mit diesen Folien wird eine Isolation erzeugt, die nach dem Thermokannenprinzip arbeitet. Die Isolation besteht dabei im wesentlichen aus zwei Laminaten (mehrere Lagen aluminiumbedampfter Polyesterfolien), in die z.B. Schaumstoffplatten eingeschweißt sind. Die unter Vakuum eingeschweißte Schaumstoffplatten dienen im wesentlichen als Abstandshalter zwischen den beiden Laminaten. Um das erforderliche Vakuum aufrechtzuhalten, müssen die Laminate eine sehr hohe Sauerstoffbarriere aufweisen.

Sollen Polyesterfolien mit einer aufgedampften Aluminiumschicht als Verpackungsmaterial verwendet werden, dann sind sie in der Regel Bestandteil eines mehrschichtigen Folienverbunds (Laminat). Daraus hergestellte Beutel lassen sich z. B. auf einer vertikalen Schlauchbeutel-, **F**orm-, **F**üll und Verschließmaschine (vffs) füllen. Die Beutel werden auf ihrer Innenseite (d.h. auf der dem Füllgut zugewandten Seite) gesiegelt, wobei die Siegelschicht in der Regel aus Polyethylen oder Polypropylen besteht. Der Folienverbund weist dabei den folgenden typischen Aufbau auf: Polyesterschicht/Aluminiumschicht/Kleberschicht/Siegelschicht. Bei einer Dicke des Laminats von etwa 50 bis 150 µm ist die Metallschicht nur 20 bis 50 nm dick. Eine sehr dünne Aluminiumschicht genügt daher bereits, um einen ausreichenden Lichtschutz und sehr gute Barriereeigenschaften zu erreichen.

Die Sauerstoffbarriere bzw. die Sauerstoffdurchlässigkeit wird in der Regel nicht an dem Laminat oder der Verpackung selbst, sondern an der metallisierten bzw. keramisch beschichteten Polyesterfolie gemessen. Um die Qualität der Lebens- oder Genußmittel auch bei längeren Lagerzeiten zu gewährleisten, darf die Sauerstoffdurchlässigkeit (gleich Permeation) der metallisierten Folie nicht mehr als 2 cm³/m² bar d, insbesondere aber nicht mehr als 1 cm³/m² bar d betragen. Zukünftig geht die Forderung der Verpackungsindustrie in Richtung einer noch weiter erhöhten Barriere, wobei Permeationswerte von deutlich weniger als 1,0 cm³/m² bar d angestrebt werden.

Über den Zusammenhang zwischen Sauerstoffbarriere und aluminiumbedampfter Folie (Substrat) wurde bereits an mehreren Stellen berichtet. Eine detaillierte Zusammenfassung des Standes der Technik hierhber ist beispielsweise in der Dissertation von H. Utz (Technische Universität München 1995: "Barriereeigenschaften aluminiumbedampfter Kunststoffolien") zu finden.

Es ist noch nicht hinreichend erforscht, worauf die Barrierewirkung der metallisierten Folie im einzelnen beruht. Wichtige Einflußgrößen sind offensichtlich die Substratoberfläche und die Art des Substratpolymers sowie dessen Morphologie. Allgemein wird davon ausgegangen, daß glatte Oberflächen bessere Barriereeigenschaften ergeben (vgl. Utz, Seite 38 ff). Von Weiss (vgl. "Thin Solids Films" 204 (1991) , S. 203-216) wurde hierzu gezeigt, daß in eine Beschichtung in unterschiedlichen Konzentrationen eingebrachte Titandioxidpartikel nach dem Aluminiumbedampfen mit steigendem TiO₂ -Anteil höhere Sauerstoffdurchlässigkeiten ergeben. Den Untersuchungen von Utz zufolge soll zwischen der Oberflächenrauhigkeit der PET-Folie und der Sauerstoffbarriere kein unmittelbarer Zusammenhang bestehen.

In der DE 19720505.4 wird eine biaxial orientierte Polyesterfolie mit einer Basisschicht vorgeschlagen, die zu mindestens 80 Gew.-% aus einem thermoplastischen Polyester besteht, einer Deckschicht und einer auf der Deckschicht befindlichen metallischen oder keramischen Schicht, wobei die Folie dadurch gekennzeichnet ist, daß die Deckschicht aus einem Polymer oder einem Copolymer oder einem Gemisch von Polymeren besteht, das mindestens 40 Gew.-% an Ethylen-2,6-naphthalat-Einheiten, bis zu 40 Gew.-% an Ethylen-terephthalat-Einheiten und gegebenenfalls bis zu 60 Gew.% an Einheiten aus anderen aliphatischen, cycloaliphatischen oder aromatischen Diolen und/oder Dicarbonsäuren enthält, mit der Maßgabe, daß der T_{g}2-Wert der Polyesterfolie über dem T_{g}2-Wert der Basisschicht, aber unter dem T_{g}2-Wert der Deckschicht liegt.

Aufgabe der vorliegenden Erfindung ist es, ein Folienlaminat zur Verfügung zu stellen, das sich durch eine hohe Sauerstoffbarriere (durch die unlaminierte Basisfolie sollen weniger als 0,05 cm³ Sauerstoff pro Quadratmeter und pro Tag diffundieren, wenn Luft mit einem Druck von 1 bar darauf lastet) auszeichnet. Das Folienlaminat soll den bekannten Verpackungsfolien dieser Art in den übrigen Eigenschaften mindestens gleichwertig sein. Es soll sich zudem einfach und preiswert herstellen lassen.

Gelöst wird die Aufgabe durch ein Folienlaminat, enthaltend eine biaxial orientierte Polyesterfolie und eine weitere, auf die Polyesterfolie auflaminierte Folie, wobei die Polyesterfolie eine Basisschicht umfaßt, die zu mindestens 80 Gew.-% aus einem thermoplastischen Polyester besteht, mindestens eine Deckschicht und eine auf der Deckschicht befindlichen metallischen oder keramischen Schicht, wobei die Deckschicht aus einem Polymer oder einem Copolymer oder einem Gemisch von Polymeren besteht, das mindestens 40 Gew.-% an Ethylen-2,6-naphthalat-Einheiten, bis zu 40 Gew.-% an Ethylen-terephthalat-Einheiten und gegebenenfalls bis zu 60 Gew.% an Einheiten aus anderen aliphatischen, cycloaliphatischen oder aromatischen Diolen und/oder Dicarbonsäuren enthält, mit der Maßgabe, daß der T_{g}2-Wert der Polyesterfolie über dem T_{g}2-Wert der Basisschicht, aber unter dem T_{g}2-Wert der Deckschicht liegt.

Bevorzugt ist eine Polyesterfolie, in der die Polymere der Deckschicht mindestens 65 Gew.-% an Ethylen-2,6-naphthalat-Einheiten und bis zu 35 Gew.-% an Ethylen-terephthalat-Einheiten enthält. Davon ist wiederum eine solche Polyesterfolie besonders bevorzugt, in der die Polymere der Deckschicht mindestens 70 Gew.-% an Ethylen-2,6-naphthalat-Einheiten und bis zu 30 Gew.-% an Ethylen-terephthalat-Einheiten enthalten.

Geeignete andere aliphatische Diole sind beispielsweise Diethylenglykol, Triethylenglykol, aliphatische Glykole der allgemeinen Formel HO-(CH₂)ₙ-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, ggf. heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel HO-C₆H₄-X-C₆H₄-OH, wobei X für -CH₂-, -C(CH₃)₂-, -C(CF₃)₂-, -O-, -S- oder -SO₂- steht. Daneben sind auch Bisphenole der Formel HO-C₆H₄-C₆H₄-OH gut geeignet.

Andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die (C₃-C₁₉) Alkandisäuren besonders geeignet, wobei der Alkanteil geradkettig oder verzweigt sein kann.

Vorzugsweise enthält die Deckschicht mindestens jeweils 35 Gew.-% an Ethylenglykol- und Naphthalin-2,6-dicarbonsäure-Einheiten. Die Folie ist ferner dadurch gekennzeichnet, daß weniger als 0,05 cm³, bevorzugt weniger als 0,03 cm³, besonders bevorzugt weniger als 0,01 cm³, an Luftsauerstoff pro Quadratmeter und Tag bei einem Druck von 1 bar hindurchdiffundieren können.

Gegenstand der vorliegenden Erfindung ist auch ein Verfahren zur Herstellung dieses Folienlaminats. Es umfaßt das
a) Herstellen einer Folie aus Basis- und Deckschicht(en) durch Coextrusion,
b) biaxiale Verstrecken der Folie,
c) Thermofixieren der verstreckten Folie,
d) Aufbringen einer O₂-barrierefunktionalen Schicht auf die thermofixierte Folie und
e) Auflaminieren einer zweiten Folie auf die in Schritt d) funktionalisierte Oberfläche der Basisfolie.

Zur Herstellung der Deckschicht werden zweckmäßig Granulate aus Polyethylenterephthalat und Polyethylen-2,6-naphthalat im gewünschten Mischungsverhältnis direkt einem Extruder zugeführt. Die beiden Materialien lassen sich bei etwa 300 °C und bei einer Verweilzeit von etwa 5 min aufschmelzen und extrudieren. Unter diesen Bedingungen können im Extruder Umesterungsreaktionen ablaufen, bei denen sich Copolymere aus den Homopolymeren bilden.

Die Polymere für die Basisschicht werden zweckmäßig über einen weiteren Extruder zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiteren Walzen abgezogen und verfestigt.

Die biaxiale Verstreckung wird im allgemeinen sequentiell durchgeführt. Dabei wird vorzugsweise erst in Längsrichtung (d.h. in Maschinenrichtung) und anschließend in Querrichtung (d.h. senkrecht zur Maschinenrichtung) verstreckt. Dies führt zu einer Orientierung der Molekülketten. Das Verstrecken in Längsrichtung läßt sich mit Hilfe zweier entsprechend dem angestrebten Streckverhältnis verschieden schnell laufenden Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstrekkung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1.

Vor der Querstreckung kann man eine oder beide Oberfläche(n) der Folie nach den bekannten Verfahren in-line beschichten. Die In-Line-Beschichtung kann beispielsweise zu einer verbesserten Haftung der Metallschicht oder einer eventuell aufgebrachten Druckfarbe, aber auch zur Verbesserung des antistatischen Verhaltens oder des Verarbeitungsverhaltens dienen.

Bei der nachfolgenden Thermofixierung wird die Folie etwa 0,1 bis 10 s lang bei einer Temperatur von 150 bis 250 °C gehalten. Anschließend wird die Folie in üblicher Weise aufgewickelt.

Die biaxial verstreckte und thermofixierte Polyesterfolie kann vor dem Aufbringen der O₂-barrierefunktionalen Schicht auf einer oder beiden Seite(n) corona- oder flammbehandelt werden. Die Behandlungsintensität ist so gewählt, daß die Oberflächenspannung der Folie im allgemeinen über 45 mN/m liegt.

Das Aufbringen der O₂-barrierefunktionalen Schicht, insbesondere der Metallschicht bzw. der keramischen Schicht erfolgt zweckmäßig auf allgemein üblichen industriellen Anlagen. Metallschichten aus Aluminium werden üblicherweise durch Bedampfen hergestellt, während keramische Schichten daneben auch mit Elektronenstrahlverfahren oder durch Aufsputtern erzeugt werden können. Die Verfahrensparameter der Anlage beim Aufbringen der Metallschicht bzw. der keramischen Schicht auf die Folien entsprechen den Standardbedingungen. Die Metallisierung der Folien wird vorzugsweise so durchgeführt, daß die optische Dichte der metallisierten Folien im üblichen Bereich von ca. 2,2 bis 2,8 liegen. Das Aufbringen der keramischen Schicht auf die Folie wird so durchgeführt, daß die Schichtstärke der Oxidschicht vorzugsweise im Bereich von 10 bis 100 nm liegt. Die Bahngeschwindigkeit der zu beschichtenden Folie liegt bei allen Einstellungen zwischen 5 und 10 m/s. Auf die Metallisierung mit einer Laborbedampfungsanlage wurde nicht zurückgegeriffen, weil die Erfahrung gezeigt hat, daß dann die Barrierewerte in der Regel wesentlich höher sind und nicht zu Vergleichszwecken herangezogen werden können.

Von großem Vorteil bei diesem Verfahren ist, daß dem Extruder Granulate zugegeben werden können, die die Maschine nicht verkleben.

Die Basisschicht der Folie besteht bevorzugt zu mindestens 90 Gew.-% aus dem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethylcyclohexan und Terephthalsäure [= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Deckschicht vorkommen können.

Die Herstellung der Polyester kann nach dem Umesterungsverfahren erfolgen. Dabei geht man von Dicarbonsäureestern und Diolen aus, die mit den üblichen Umesterungskatalysatoren, wie Zink-, Calcium-, Lithium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Für die Verarbeitung der Polymere hat es sich als günstig erwiesen, die Polymere für die Basisschicht und die Deckschicht(en) so zu wählen, daß sich die Viskositäten der jeweiligen Polymerschmelzen nicht zu sehr unterscheiden. Im anderen Fall ist mit Fließstörungen oder Streifenbildung auf der fertigen Folie zu rechnen. Für die Beschreibung der Viskositätsbereiche der beiden Schmelzen wird eine modifizierte Lösungsmittelviskosität (SV-Wert oder solution viscosity) verwendet. Für handelsübliche Polyethylenterephthalate, die sich zur Herstellung von biaxial orientierten Folien eignen, liegen die SV-Werte im Bereich von 600 bis 1000. Um eine einwandfreie Qualität der Folie zu gewährleisten, sollte der SV-Wert der Copolymere für die Deckschicht im Bereich von 500 bis 1200 liegen. Falls erwünscht, kann an den jeweiligen Granulaten eine Festphasenkondensation durchgeführt werden, um die benötigten SV-Werte der Materialien einzustellen. Allgemein gilt, daß sich die SV-Werte der Polymerschmelzen für Basis- und Deckschicht(en) um nicht mehr als 200, vorzugsweise nicht mehr als 100, unterscheiden sollten.

Die Polymere für die Deckschicht können auf 3 verschiedene Weisen hergestellt werden:
a) Bei der gemeinsamen Polykondensation werden Terephthalsäure und Naphthalin-2,6-dicarbonsäure gemeinsam mit Ethylenglykol in einem Reaktionskessel vorgelegt und unter Verwendung der üblichen Katalysatoren und Stabilisatoren zu einem Polyester polykondensiert. Die Terephthalat- und Naphthalat-Einheiten sind dann in dem Polyester statistisch verteilt.
b) Polyethylenterephthalat (PET) und Polyethylen-2,6-naphthalat (PEN) werden im gewünschten Verhältnis gemeinsam aufgeschmolzen und gemischt. Dies kann entweder in einem Reaktionskessel oder vorzugsweise in einem Schmelzkneter (Zweischneckenkneter) oder einem Extruder erfolgen. Sofort nach dem Aufschmelzen beginnen Umesterungsreaktionen zwischen den Polyestern. Zunächst erhält man Blockcopolymere, aber mit zunehmender Reaktionszeit - abhängig von der Temperatur und Mischwirkung des Rührelements - werden die Blöcke kleiner, und bei langer Reaktionszeit erhält man ein statistisches Copolymer. Allerdings ist es nicht nötig und auch nicht unbedingt vorteilhaft zu warten, bis eine statistische Verteilung erreicht ist, denn die gewünschten Eigenschaften werden auch mit einem Blockcopolymer erhalten. Anschließend wird das erhaltene Copolymer aus einer Düse herausgepreßt und granuliert.
c) PET und PEN werden als Granulat im gewünschten Verhältnis gemischt und die Mischung dem Extruder für die Deckschicht zugeführt. Hier findet die Umesterung zum Copolymer direkt während der Herstellung der Folie statt. Dieses Verfahren hat den Vorteil, daß es sehr wirtschaftlich ist. In der Regel werden mit diesem Verfahren Blockcopolymere erhalten, wobei die Blocklänge von der Extrusionstemperatur, der Mischwirkung des Extruders und der Verweilzeit in der Schmelze abhängt.

In einer bevorzugten Ausführungsform sind 0,1 bis 20 Gew.-% der Polymere der Basisschicht identisch mit denen der Deckschicht. Diese werden der Basisschicht entweder direkt bei der Extrusion beigemischt oder sind automatisch in der Folie durch Regeneratzugabe enthalten. Der Anteil dieser Copolymere in der Basisschicht ist so gewählt, daß die Basisschicht kristallinen Charakter aufweist.

In einer weiteren Ausführungsform umfaßt die Folie auf der der Deckschicht abgewandten Seite eine weitere Deckschicht aus Polyethylenterephthalat, die ebenfalls wie die zu metallisierende Deckschicht Pigmente enthalten kann.

Die Basisfolie zeigt eine überraschend hohe Sauerstoffbarriere. Werden dagegen für die zu beschichtende Deckschicht(en) Polymere verwendet, die weniger als 40 Gew.-% Ethylen-2,6-naphthalat-Einheiten und mehr als 40 Gew.-% Ethylenterephthalat-Einheiten enthalten, dann ist die Folie in manchen Fällen zwar etwas weniger durchlässig für Sauerstoff als eine metallisierte oder beschichtete Standardpolyesterfolie (die zu 100 Gew.-% aus Polyetylenterephthalat besteht), die Durchlässigkeit ist jedoch noch immer viel zu hoch. Es wurde sogar gefunden, daß die Sauerstoffbarriere schlechter ist als bei einer metallisierten oder keramisch beschichteten Standardpolyesterfolie, wenn die Deckschicht 30 bis 40 Gew.-% Ethylen-2,6-naphthalat-Einheiten und 60 bis 70 Gew.-% Ethylenterephthalat-Einheiten enthält. Selbst unter diesen Umständen kann jedoch eine Folie mit einer Deckschicht, die zwischen 5 und 40 Gew.-% Ethylen-2,6-naphthalat-Einheiten und mehr als 40 Gew.-% Ethylen-terephthalat-Einheiten enthält vorteilhaft sein, wenn die Sauerstoffbarriere für die betreffende Anwendung keine entscheidende Rolle spielt.

Weiterhin zeichnen sich die Basisfolien dadurch aus, daß die Glasübergangstemperatur T_{g} des Copolymers bzw. der Copolymere der Deckschicht(en) im Vergleich zum Stand der Technik höher liegt als die Glasübergangstemperatur T_{g} der Polymere der Basisschicht. Die Glasübergangstemperatur der eingesetzten Copolymere für die Deckschicht(en) liegt vorzugsweise im Bereich von 80 bis 102 °C. Bei der Bestimmung der Glasübergangstemperaturen mittels DSC können die Übergänge der beiden Schichten nicht unterschieden werden.

Glasübergänge, die beim ersten Aufheizvorgang an biaxial orientierten, wärmefixierten Folien bestimmt werden (im folgenden T_{g}1 genannt), sind durch die Kristallinität sowie die molekularen Spannungen im amorphen Anteil der Proben in ihrem Ausmaß relativ gering, über einen breiten Temperaturbereich verteilt und zu höheren Temperaturen verschoben. Vor allem aufgrund von Orientierungseffekten eignen sie sich nicht zur Charakterisierung eines Polymers. Die Auflösung von DSC-Meßgeräten reicht oft nicht aus, um die wegen der Orientierung und Kristallinität kleinen und "verschmierten" Glasstufen im ersten Aufheizvorgang (T_{g}1) der einzelnen Schichten der Basisfolie zu erfassen. Wenn die Proben aufgeschmolzen und dann unter ihre Glasübergangstemperatur rasch wieder abgekühlt (abgeschreckt) werden, so werden die Orientierungseffekte eliminiert. Beim erneuten Aufheizen werden dann Glasübergänge (hier als T_{g}2 bezeichnet) gemessen, die eine höhere Intensität haben und charakteristisch sind für die jeweiligen Polymere. Die Glasübergänge der einzelnen Schichten lassen sich allerdings auch hier nicht unterscheiden, weil sich die Schichten beim Aufschmelzen vermischen und die darin enthaltenen Polyester untereinander Umesterungsreaktionen eingehen. Es ist jedoch völlig ausreichend, die T_{g}2 der gesamten coextrudierten Folien mit der T_{g}2 des für die Basisschicht verwendeten Polymers zu vergleichen. In bekannten Folien (wo beispielsweise die Deckschicht lsophtalsäure enthält) liegt der T_{g}2-Wert der Basisschicht höher als der der coextrudierten Folie, während der T_{g}2-Wert der Deckschicht niedriger liegt als der der Basisschicht und auch der der coextrudierten Folie. In der Basisfolie des erfindungsgemäßen Laminats ist dies gerade umgekehrt. Hier liegt der T_{g}2-Wert der coextrudierten Folie höher als der der Basisschicht, aber unterhalb des T_{g}2-Werts der Deckschicht.

Die geforderte hohe Sauerstoffsperre wird nicht erreicht, wenn die O₂-barrierefunktionale Schicht auf der der Deckschicht abgewandten Seite der Basisschicht (und nicht auf der Deckschicht selbst) aufgebracht ist. Das gilt auch dann, wenn die Zusammensetzung von Basis- und Deckschicht ansonsten der oben beschriebenen Basisfolie entspricht.

Die Basisschicht und die Deckschicht(en) können zusätzlich übliche Additive, wie Stabilisatoren und Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt. Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Arcrylat-Partikel.

Als Additive können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den üblichen Konzentrationen, z.B. als glykolische Dispersion während der Polykondensation oder über Masterbatche bei der Extrusion zugegeben werden. Als besonders geeignet haben sich Pigmentkonzentrationen von 0,0001 bis 5 Gew.-% erwiesen. Eine detaillierte Beschreibung der Antiblockmittel findet sich beispielsweise in der EP-A 0 602 964.

Zur Einstellung weiterer gewünschter Eigenschaften kann die Folie beschichtet oder corona- bzw. flammvorbehandelt sein. Typische Beschichtungen sind haftvermittelnde, antistatisch, schlupfverbessernd oder dehäsiv wirkende Schichten. Es bietet sich an, diese zusätzlichen Schichten über inline coating mittels wässriger Dispersionen vor der Querverstreckung auf die Folie aufzubringen.

Die Polyesterfolie enthält vorzugsweise noch eine zweite Deckschicht. Aufbau, Dicke und Zusammensetzung einer zweiten Deckschicht können unabhängig von der bereits vorhandenen Deckschicht gewählt werden, wobei die zweite Deckschicht ebenfalls die bereits genannten Polymere oder Polymermischungen enthalten kann, welche aber nicht mit denen der ersten Deckschicht identisch sein müssen. Die zweite Deckschicht kann auch andere gängige Deckschichtpolymere enthalten.

Zwischen der Basisschicht und den Deckschicht(en) kann sich gegebenenfalls noch eine Zwischenschicht befinden. Sie kann aus den für die Basisschichten beschriebenen Polymeren bestehen. In einer besonders bevorzugten Ausführungsform besteht sie aus dem für die Basisschicht verwendeten Polyester. Sie kann auch die beschriebenen üblichen Additive enthalten. Die Dicke der Zwischenschicht ist im allgemeinen größer als 0,3 µm und liegt vorzugsweise im Bereich von 0,5 bis 15µm, insbesondere 1,0 bis 10 µm.

Die Dicke der Deckschicht(en) ist im allgemeinen größer als 0,1 µm und liegt vorzugsweise im Bereich von 0,2 bis 5 µm, insbesondere 0,2 bis 4 µm, wobei die Deckschichten gleich oder verschieden dick sein können.

Die Gesamtdicke der Polyesterfolie kann innerhalb weiter Grenzen variieren und richtet sich nach dem beabsichtigten Verwendungszweck. Sie beträgt vorzugsweise 4 bis 100 µm, insbesondere 5 bis 50 µm, vorzugsweise 6 bis 30 µm, wobei die Basisschicht einen Anteil von vorzugsweise etwa 40 bis 90 % an der Gesamtdicke hat.

Die O₂-barrierefunktionale Schicht besteht bevorzugt aus Aluminium. Doch sind auch andere Materialien geeignet, die sich in Form einer dünnen, zusammenhängenden Schicht aufbringen lassen. Insbesondere ist z.B. Silizium geeignet, welches im Vergleich zu Aluminium eine transparente Barriereschicht ergibt. Die keramische Schicht besteht bevorzugt aus Oxiden von Elementen der II., III. oder IV. Hauptgruppe des Periodensystems, insbesondere Oxiden des Magnesiums, Aluminiums oder Siliciums. Allgemein sind solche metallischen oder keramischen Materialien verwendet, die bei vermindertem Druck bzw. im Vakuum aufgebracht werden können. Die Dicke der aufgebrachten Schicht beträgt allgemein 10 bis 100 nm.

Die anschließend auf die Basisfolie auflaminierte zweite Folie wird nach bekannten Verfahren durch zusammenführen der beiden Folienbahnen aufgebracht. Hierbei wird die zweite Folie auf die durch Metall oder keramische Beschichtung funktionalisierte Oberfläche der Basisfolie aufgebracht. Als zweite Folie kommen beispielsweise Papier oder Folien aus thermoplastischem Material in Frage. Als thermoplastisches Material können die üblicherweise im Verpackungssektor verwendeten Polymere wie siegelfähige Polyester (z.B. isophthalsäurehaltige Polyethylenterephthalte), Polyolefine wie Polyethylen, Polypropylen, Polybutylen oder Copolymere hieraus, Polyamide, PVC oder ähnliche eingesetzt werden.

Ein Vorteil besteht darin, daß die Herstellungskosten der erfindungsgemäßen Folienlaminate nur unwesentlich über denen einer Folie aus Standardpolyesterrohstoffen liegen. Die sonstigen verarbeitungs- und gebrauchsrelevanten Eigenschaften der erfindungsgemäßen Folienlaminate bleiben im wesentlichen unverändert oder sind sogar verbessert. Daneben ist bei der Herstellung der Basisfolie gewährleistet, daß das Regenerat in einer Konzentration von 20 bis 50 Gew.-%, bezogen auf das Gesamtgewicht der Folie, wiederverwendet werden kann, ohne daß dabei die physikalischen Eigenschaften des Folienlaminats nennenswert negativ beeinflußt werden.

Das Folienlaminat eignet sich hervorragend zur Verpackung von licht- und/oder luftempfindlichen Nahrungs- und Genußmitteln. Speziell geeignet ist sie zur Herstellung von Vakuumverpackungen für Kaffee, insbesondere gemahlenem Kaffee. Daneben ist sie auch zur Herstellung von Isoliermaterialien, z.B. den eingangs beschriebenen Dämmplatten für Kühlschränke, geeignet.

## Patentansprüche

1. Folienlaminat, enthaltend eine biaxial orientierte Polyesterfolie und eine weitere, auf die Polyesterfolie auflaminierte Folie, wobei die Polyesterfolie eine Basisschicht umfaßt, die zu mindestens 80 Gew.-% aus einem thermoplastischen Polyester besteht, mindestens eine Deckschicht und eine auf der Deckschicht befindlichen metallischen oder keramischen Schicht, wobei die Deckschicht aus einem Polymer oder einem Copolymer oder einem Gemisch von Polymeren besteht, das mindestens 40 Gew.-% an Ethylen-2,6-naphthalat-Einheiten, bis zu 40 Gew.-% an Ethylen-terephthalat-Einheiten und gegebenenfalls bis zu 60 Gew.% an Einheiten aus anderen aliphatischen, cycloaliphatischen oder aromatischen Diolen und/oder Dicarbonsäuren enthält, mit der Maßgabe, daß der T_{g}2-Wert der Polyesterfolie über dem T_{g}2-Wert der Basisschicht, aber unter dem T_{g}2-Wert der Deckschicht liegt.

2. Laminat gemäß Anspruch 1, dadurch gekennzeichnet, daß die Polymere der Deckschicht mindestens 65 Gew.-% an Ethylen-2,6-naphthalat-Einheiten und bis zu 35 Gew.-% an Ethylen-terephthalat-Einheiten, besonders bevorzugt mindestens 70 Gew.-% an Ethylen-2,6-naphthalat-Einheiten und bis zu 30 Gew.-% an Ethylen-terephthalat-Einheiten enthalten.

3. Laminat gemäß Anspruch 1 oder 2, dadurch gekennzeichnet, daß die Deckschicht eine Dicke von 0,1 bis 5 µm, bevorzugt von 0,2 bis 4,5 µm, besonders bevorzugt von 0,3 bis 4 µm, aufweist.

4. Laminat gemäß einem oder mehreren der Anspüche 1 bis 3, dadurch gekennzeichnet, daß die Deckschicht pigmentiert ist.

5. Laminat gemäß einem oder mehreren der Ansprüche 1 bis 4, dadurch gekennzeichnet, daß die Polyesterfolie eine zusätzliche Deckschicht auf der der O₂-barrierefunktionalen Schicht abgewandten Seite der Basisschicht umfaßt.

6. Laminat gemäß Anspruch 5, dadurch gekennzeichnet, daß die zusätzliche Deckschicht pigmentiert ist.

7. Laminat gemäß einem oder mehreren der Ansprüche 1 bis 6, dadurch gekennzeichnet, daß zwischen der Basisschicht und mindestens einer der Deckschichten noch eine Zwischenschicht befindet.

8. Laminat gemäß einem oder mehreren der Ansprüche 1 bis 7, dadurch gekennzeichnet, daß die O₂-barrierefunktionale Schicht eine Metallschicht ist und diese metallische Folie eine optische Dichte im Bereich von 2,2 bis 2,8 aufweist.

9. Laminat gemäß einem oder mehreren der Ansprüche 1 bis 7, dadurch gekennezeichnet, daß die O₂-barrierefunktionale Schicht aus Aluminium, Silicium, SiOₓ, AIOₓ oder MgOₓ besteht.

10. Laminat gemäß einem oder mehreren der Ansprüche 1 bis 9, dadurch gekennzeichnet, dass die zweite auflaminierte Folie siegelfähig ist.

11. Laminat gemäß einem oder mehreren der Ansprüche 1 bis 9, dadurch gekennzeichnet, dass die zweite, auflaminierte Folie Papier ist oder im wesentlichen aus einem isophthalsäurehaltigen Polyester, einem Polyolefin (homopolymer oder Copolymer), einem Polyamid oder PVC besteht.

12. Verfahren zur Herstellung des Laminats nach einem oder mehreren der Ansprüche 1 bis 11, umfassend die Schritte
a) Herstellen einer Polyesterfolie aus Basis- und Deckschicht(en) durch Coextrusion,
b) biaxiales Verstrecken der Polyesterfolie,
c) Thermofixieren der verstreckten Polyesterfolie,
d) Aufbringen der O₂-barrierefunktionalen Schicht auf die thermofixierte Polyesterfolie und
e) Auflaminieren einer zweiten Folie auf die in Schritt d) funktionalisierte Oberfläche der Polyesterfolie.

13. Verfahren gemäß Anspruch 12, dadurch gekennzeichnet, daß die biaxiale Verstreckung sequentiell durchgeführt wird.

14. Verfahren gemäß Anspruch 13, dadurch gekennzeichnet, daß die Längsstrekkung bei 80 bis 130 °C und die Querstreckung bei 90 bis 150 °C durchgeführt wird.

15. Verfahren gemäß Anspruch 13 oder 14, dadurch gekennzeichnet, daß das Längsstreckverhältnis im Bereich von 2,5 : 1 bis 6 : 1, bevorzugt von 3 : 1 bis 5,5 : 1, und das Querstreckverhältnis im Bereich von 3,0 : 1 bis 5,0 : 1, bevorzugt von 3,5 : 1 bis 4,5 : 1, liegt.

16. Verfahren gemäß einem oder mehreren der Ansprüche 12 bis 15, dadurch gekennzeichnet, daß die Folie bei der Thermofixierung etwa 0,1 bis 10 s lang bei einer Temperatur von 150 bis 250 °C gehalten wird.

17. Verfahren gemäß einem oder mehreren der Ansprüche 12 bis 16, dadurch gekennzeichnet, daß die thermofixierte Folie vor dem Aufbringen der O₂-barrierefunktionalen Schicht in-line beschichtet wird.

18. Verfahren gemäß einem oder mehreren der Ansprüche 12 bis 17, dadurch gekennzeichnet, daß die thermofixierte Folie vor dem Aufbringen der O₂-barrierefunktionalen Schicht auf einer oder beiden Seiten corona- oder flammbehandelt wird.

19. Verwendung des Laminats nach einem oder mehreren der Ansprüche 1 bis 11 zum Verpacken von Lebens- und Genußmittel.
